# EUROPEAN PATENT SPECIFICATION

(11) **EP 2 102 569 B1**
(45) Date of publication and mention of the grant of the patent: **28.06.2017**
(21) Application number: 06848215.7
(22) Date of filing: 27.12.2006
(51) Int. Cl.: F25D 17/02, F24F 11/00

(54) **METHODS AND SYSTEMS FOR CONTROLLING AN AIR CONDITIONING SYSTEM OPERATING IN FREE COOLING MODE**
VERFAHREN UND SYSTEME ZUR STEUERUNG EINER IM FREIKÜHLMODUS ARBEITENDEN KLIMAANLAGE
PROCÉDÉS ET SYSTÈMES DE COMMANDE D'UNE CLIMATISATION FONCTIONNANT EN MODE REFROIDISSEMENT NATUREL

(43) Date of publication of application: 23.09.2009
(73) Proprietor: Carrier Corporation, Farmington, CT 06034-4015 (US)
(72) Inventor: CHESSEL, Julien, 01800 Villieu Loyes Mollon (FR); DELPECH, Pierre, 69250 Fleurieu Sur Saone (FR); GOUX, Jean-Philippe, 69780 Tossieu (FR)
(74) Representative: Lees, Gregory Alexander
(86) International application number: PCT/US2006/049370
(87) International publication number: WO 2008/079138

(56) References cited:
- EP-A1- 1 134 523
- CA-A1- 2 298 373
- US-A- 5 040 377
- US-A- 5 797 275
- US-B2- 6 644 049

## Description

### BACKGROUND OF THE INVENTION

### 1. Field of the Invention

The present disclosure is related to air conditioning systems. More particularly, the present disclosure is related to methods and systems for controlling an air conditioning system operating in a free-cooling mode. Exemplary air conditioning systems having free-cooling modes are disclosed in EP 1134523 and US 5797275.

### 2. Description of Related Art

During the typical operation of air conditioning systems, the air conditioning system is run in a cooling mode wherein energy is expended by operating a compressor to compress and circulate a refrigerant to chill or condition a working fluid, such as air or other secondary loop fluid (e.g., water or glycol), in a known manner. The conditioned working fluid can then be used in a refrigerator, a freezer, a building, a car, and other spaces with climate controlled environment.

However, when the outside ambient temperature is low, there exists the possibility that the outside ambient air itself may be utilized to provide cooling to the working fluid without engaging in the cooling mode. When the outside ambient air is used by an air conditioning system to condition the working fluid, the system is referred to as operating in a free cooling mode. As noted above, traditionally, even when the ambient outside air temperature is low, the air conditioning system is run in the cooling mode. Running in cooling mode under such conditions provides a low efficiency means of conditioning the working fluid. In contrast, running the air conditioning system under such conditions in a free cooling mode is more efficient. In the free cooling mode, one or more ventilated heat exchangers and pumps are activated so that the refrigerant circulating throughout the air conditioning system is cooled by the outside ambient air and then the cooled refrigerant is used to cool the working fluid.

Accordingly, it has been determined by the present disclosure that there is a need for methods and systems for controlling air conditioning systems having a free cooling mode.

### BRIEF SUMMARY OF THE INVENTION

Viewed from a first aspect, the present invention provides a method of controlling an air conditioning system operating in a free cooling mode, comprising: measuring a first temperature of outside ambient air proximate to a condenser; measuring a second temperature of a working fluid exiting an evaporator; calculating a temperature difference between said first and second temperatures; comparing said temperature difference to a pre-determined optimal value; and adjusting an energy requirement of the air conditioning system based on said temperature difference, wherein adjusting said energy requirement comprises adjusting a speed of a refrigerant pump during the free cooling mode based on said temperature difference.

Viewed from a second aspect, the present invention provides an air conditioning system having a free cooling mode and a cooling mode, comprising: a condenser placing a refrigerant in heat exchange relationship with ambient outside air; a first temperature sensor for measuring a first temperature of said ambient outside air; an evaporator being configured to place said refrigerant in heat exchange relationship with a working fluid; a second temperature sensor for measuring a second temperature of the working fluid as the working fluid exits said evaporator; a refrigerant pump for pumping refrigerant in the free cooling mode; and a controller for calculating a temperature difference between said first and second temperatures, said controller adjusting an energy requirement of the air conditioning system based on said difference, wherein said controller adjusts said energy requirement by intermittently turning off and on a refrigerant pump during the free cooling mode.

The above-described and other features and advantages of the present disclosure will be appreciated and understood by those skilled in the art from the following detailed description, drawings, and appended claims.

### BRIEF DESCRIPTION OF THE SEVERAL VIEWS OF THE DRAWINGS

FIG. 1 is an exemplary embodiment of an air conditioning system in cooling mode according to the present disclosure.
FIG. 2 is an exemplary embodiment of an air conditioning system in free cooling mode according to the present disclosure.
FIG. 3 illustrates an exemplary embodiment of a method according to the present disclosure of operating an air conditioning system having a free-cooling mode and a cooling mode.
FIG. 4 is a graph illustrating capacity versus Delta T_free cooling and Unit Efficiency versus Delta T_Free cooling.

### DETAILED DESCRIPTION OF THE INVENTION

The present disclosure is directed to an air conditioning system having a cooling mode and a free cooling mode. More specifically, the present disclosure is directed to methods for controlling the efficiency of an air conditioning system operating in a free cooling mode. It has been discovered in the present disclosure that while initial external energies are necessary to begin free cooling mode in air conditioning system 10, these energies can be decreased during the free cooling mode as the change in temperature between outside ambient air and a working fluid reach an optimal value. Thus, it is possible to control the energetic efficiency of the air conditioning system. Advantageously, by improving the energetic efficiency of air conditioning system 10, costs associated with operating air conditioning system 10 can be reduced.

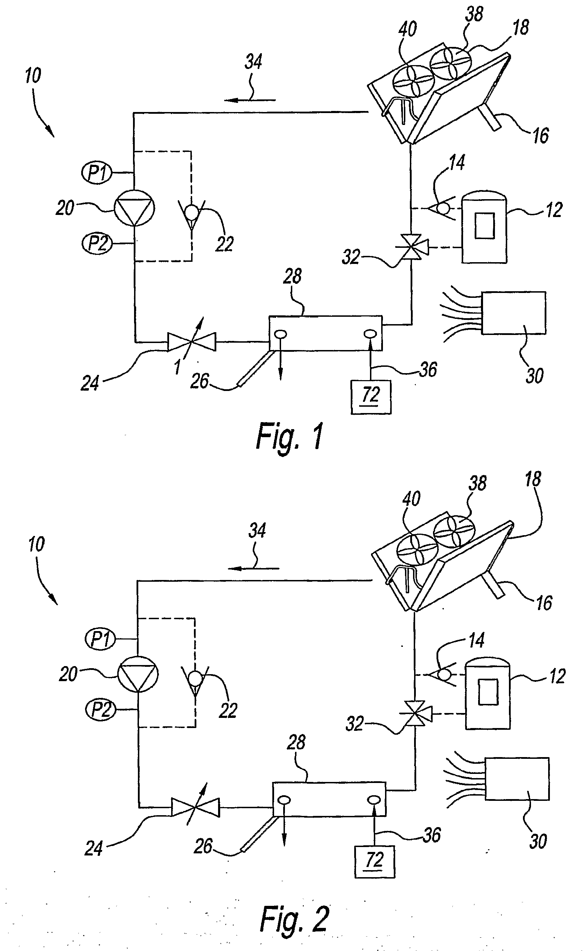

Referring to the drawings and in particular to FIGS. 1 and 2, exemplary embodiments of an air conditioning system ("system") operating in cooling mode (FIG. 1) and in free cooling mode (FIG. 2) are shown and generally referred to by reference numeral 10.

System 10 includes a compressor 12, a first valve 14, a first temperature sensor 16, a condenser 18, a refrigerant pump 20, a second valve 22, an expansion device 24, a second temperature sensor 26, an evaporator 28, a controller 30, a third valve 32, a refrigerant 34, and a working fluid 36.

System 10 in cooling mode utilizes compressor 12 to pump refrigerant 34 from evaporator 28 to condenser 18. However, system 10 in free-cooling mode utilizes a refrigerant pump 20 to pump refrigerant throughout the system. Whereas system 10 in cooling mode does not utilize refrigerant pump 20 during operation, the system in free cooling mode does not utilize compressor 12 during operation.

Referring to FIG. 1, system 10 operates in cooling mode in a known manner. Specifically, controller 30 is in electrical communication with third valve 32 so that third valve 32 is adjusted to be in position so that refrigerant 34 can flow from evaporator 28 to compressor 12. If system 10 was operating in free cooling mode previously, controller 30 turns off refrigerant pump 20 so that refrigerant 34 flows from condenser 18 through second valve 22 to expansion valve 24, thereby bypassing the refrigerant pump. Second valve 22 is a mechanical check valve. When refrigerant pump 20 is turned off, refrigerant 34 will flow through second valve 22 rather than flow through the refrigerant pump due to internal pump-resistance. In cooling mode, there is a higher pressure drop in refrigerant pump 20 than in second valve 22. Controller 30 turns on compressor 12. Compressor 12 compresses refrigerant 34 which flows through first valve 14 to condenser 18 wherein there is a heat exchange between the refrigerant and ambient outside air and the refrigerant begins to cool. In one embodiment of the present disclosure, first valve 14 is a check valve.

First temperature sensor 16 measures the temperature of the ambient outside air. Controller 30 turns on at least one of condenser fans 38 and 40 so that ambient air flows through the condenser in heat exchange relationship with refrigerant 34 so that heat from the refrigerant is transferred to the ambient air. Refrigerant 34 then passes through second valve 22, bypassing refrigerant pump 20, to expansion valve 24. In an embodiment of the present disclosure, second valve 22 is a check-valve.

When expansion device 24 is opened, compressed refrigerant 34 expands as the refrigerant passes through the expansion device to evaporator 28. Evaporator 28 is configured such that working fluid 36 flows through the evaporator enabling a heat exchange between refrigerant 34 and the working fluid. Second temperature sensor 26 measures the temperature of working fluid 36 exiting evaporator 28.

From evaporator 28, refrigerant 34 flows through third valve 32 to compressor 12. In one embodiment of the present disclosure, third valve 32 is a three-way valve. For purposes of the present disclosure, it is contemplated that working fluid 36 may be any known type suitable for allowing heat exchange between refrigerant 34 and the working fluid. For example, working fluid 36 may be either water or air.

Referring now to FIG. 2, system 10 operating in free cooling mode is shown. When entering free cooling mode, controller 30 is in electrical communication with various elements of system 10 placing each of them in proper configuration such that the system can operate in the free cooling mode. For example, controller 30 turns off compressor 12 and adjusts third valve 32 so that refrigerant 34 flows from evaporator 28 to condenser 18, thereby bypassing compressor 12. Controller 30 turns on at least one of condenser fans 38 and 40 so that ambient air flows through the condenser in heat exchange relationship with refrigerant 34 so that heat from the refrigerant is transferred to the ambient air. Controller 30 also turns on refrigerant pump 20 so that refrigerant 34 flows continuously from condenser 18 to the refrigerant pump.

Refrigerant pump 20 pumps refrigerant 34 from condenser 18 through expansion valve 24 to evaporator 28 wherein there is a heat transfer from the refrigerant to working fluid 36 is the same manner as discussed above in the cooling mode. Second temperature sensor 26 measures the temperature of working fluid 36 exiting evaporator 28. Refrigerant 34 then flows through third valve 32, bypassing compressor 12, to evaporator 28 as a result of natural refrigerant migration due to pump 20.

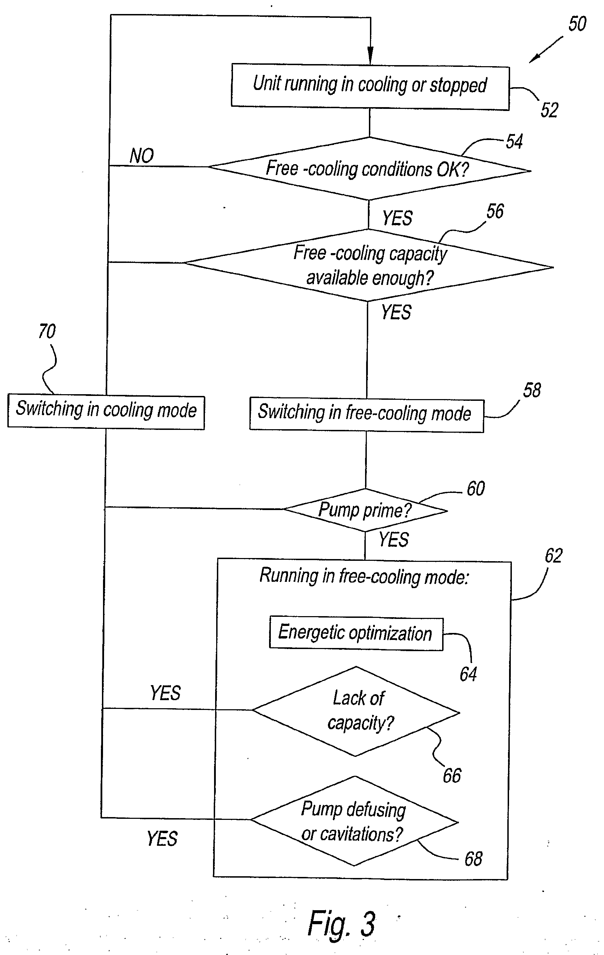

Referring to the FIG. 3, an exemplary embodiment of a method of operating system 10 having a cooling mode and a free cooling mode is shown and generally referred to by reference numeral 50. Method 50 includes a free cooling conditions determining step 54, a check for available free cooling capacity step 56, a switching step 58, a pump primed check step 60, an energetic optimization step 64, a check for lack of capacity when running in free cooling mode step 66, and pump checking step 68, where it is determined whether refrigerant pump 20 is defusing or cavitating.

Initially, system 10 is either stopped or running in cooling mode at step 52. When system 10 is running in cooling mode, the system operates as shown in FIG. 1. Preferably, method 50 comprises a computer algorithm resident on controller 30.

At free cooling condition determination step 54, method 50 determines whether present conditions are sufficient to operate system 10 in free cooling mode rather than in cooling mode. If so, method 50 determines whether there is sufficient free cooling capacity 56 available for system 10 to run in free cooling mode. If it is determined that there is sufficient capacity for system 10 to operate in free cooling mode at step 56, the system switches into free cooling mode at switching step 58.

As stated previously, when system 10 switches into free cooling mode at step 58, controller 30 is in electrical communication with various components of air conditioning system 10 so that each component is put into the correct position for free cooling. After refrigerant pump 20 is primed at priming step 60, system 10 begins to run in free cooling mode at step 62. When system 10 begins to run in free cooling mode at step 62, the system operates as shown in FIG. 2.

Initial external energies are required to begin free cooling mode in system 10. The initial external energy is required at least to power fans 38 and 40 of condenser 18 and also to power refrigerant pump 20. However, it has been determined by the present disclosure that the energy initially required to power fans 38 and 40 and refrigerant pump 20 can be decreased during free cooling mode as mode 50/controller 30 monitors the change in temperature differential between outside ambient air and working fluid 36 at energy optimization step 64.

As system 10 runs in free cooling mode at step 62, method 50 and, thus, controller 30 constantly monitors the first and second temperatures as measured at first and second temperature sensors 16,26, respectively, and calculates the difference between the two. The difference is calculated by subtracting the first temperature from the second temperature. As the calculated difference between the first and second temperatures approaches an optimal pre-determined value, controller 30 reduces the amount of external energy expended by system 10 at step 64.

In one embodiment of the present disclosure, at step 64, method 50/controller 30 will turn off either condenser fan 38 or 40 or both fans as the calculated difference between the first and second temperatures approaches the optimal pre-determined value.

In a second embodiment of the present disclosure, at step 64, method 50/controller 30 controls the speed of either condenser fan 38 or 40 or the speed of both fans as the calculated difference between the first and second temperatures approaches the optimal pre-determined value.

In a third embodiment of the present disclosure, at step 64, method 50/controller 30 will control the operation of refrigerant pump 20 as the calculated difference between the first and second temperatures approaches the optimal pre-determined value. Controller 30 does so by turning refrigerant pump 20 on and off when necessary and/or by controlling the speed of the refrigerant pump.

In yet another embodiment, at step 64, method 50/controller 30 controls the operation of a working fluid mover 72, such as a pump or fan (FIGS. 1 and 2), as the calculated difference between the first and second temperatures approaches the optimal pre-determined value. Controller 30 does so by turning working fluid mover 72 on and off when necessary and/or by controlling the speed of the mover.

When system 10 is running in free cooling mode at step 62, method 50/controller 30 continuously monitors whether or not there is sufficient capacity available to continue running in the free cooling mode at step 66. Method 50/controller 30 also continuously monitors via step 68 whether refrigerant pump 20 is defusing or cavitating. If it is determined that either there is insufficient available capacity at step 66 and/or that refrigerant pump 20 is defusing / cavitating at step 68, then the system will switch into cooling mode at switching step 70. At such time, system 10 switches into the cooling mode and operates as shown in FIG. 1.

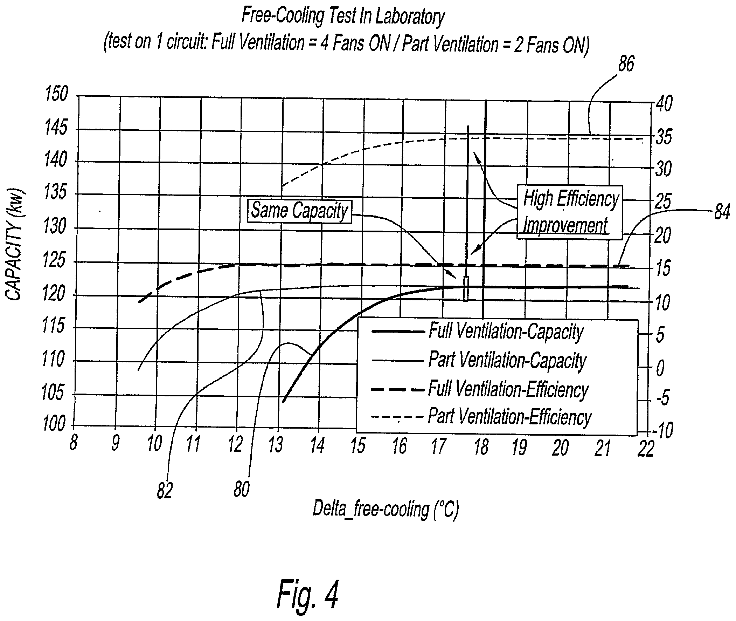

Referring now to Figure 4, a graph is shown of the capacity and efficiency of air conditioning system 10 having a condenser 18 with four fans. As can be seen, capacity in kilowatts is plotted on the left Y-axis, unit efficiency is plotted on the right Y-axis, and the difference in the temperatures between the outside ambient air and working fluid 36 (in degrees Celsius) is plotted on the X-axis (referred to as DeltaT_free-cooling °C). As used in this example, the term "full ventilation" means that all four condenser fans are on at full speed, while the term "part ventilation" means that only two fans are on at full speed.

As seen in FIG. 4, the optimal difference between the first and second temperatures is approximately 17.5 degrees Celsius. Capacity 80 shows the capacity of system 10 when operating at part ventilation. Capacity 82 shows the capacity of system 10 when operating at full ventilation. It is seen that as DeltaT_free-cooling approaches 17.5 degrees Celsius, the difference in the capacities of the part and full-ventilation air conditioning systems becomes smaller. At 17.5 degrees Celsius and for DeltaT_free-cooling values which are greater, the capacities between the full and partial ventilation air conditioning systems are nearly identical. Thus, in this embodiment, the optimal pre-determined value of step 64 is 17.5 degrees Celsius. It should be recognized, however, that the optimal pre-determined value can be greater than or less than 17.5 degrees Celsius depending on one or more variables of system 10.

Efficiency 84 represents the efficiency of system 10 operating at full ventilation. Efficiency 86 represents the efficiency of system 10 operating at part-ventilation. It is seen that as DeltaT_free-cooling approaches 17.5 degrees Celsius there is a great improvement in the efficiency of system 10 when operating at part ventilation rather than full ventilation.

Advantageously, FIG. 4 clearly demonstrates that as an optimal pre-determined value of the difference between the first and second temperatures is approached, not only does the capacity of system 10 remain the same whether two or four condenser fans are operating, but there is also a much greater increase in the efficiency of the system when two fans, rather than four fans, are operational.

It should also be noted that the terms "first", "second", "third", "upper", "lower", and the like may be used herein to modify various elements. These modifiers do not imply a spatial, sequential, or hierarchical order to the modified elements unless specifically stated.

While the present disclosure has been described with reference to one or more exemplary embodiments, it will be understood by those skilled in the art that various changes may be made and equivalents may be substituted for elements thereof without departing from the scope of the appended claims.

## Claims

1. A method of controlling an air conditioning system (10) operating in a free cooling mode, comprising:
measuring a first temperature of outside ambient air proximate to a condenser (18);
measuring a second temperature of a working fluid exiting an evaporator (36);
calculating a temperature difference between said first and second temperatures;
comparing said temperature difference to a pre-determined optimal value; and
adjusting an energy requirement of the air conditioning system based on said temperature difference the method **characterised in that** adjusting said energy requirement comprises intermittently turning off and on a refrigerant pump (20) during the free cooling mode based on said temperature difference.

2. The method of claim 1, wherein adjusting said energy requirement comprises intermittently turning off and on at least one condenser fan (38,40) during the free cooling mode.

3. The method of claim 1, wherein adjusting said energy requirement comprises varying a speed of at least one condenser fan (38,40) during the free cooling mode.

4. The method of claim 1, wherein adjusting said energy requirement comprises intermittently turning off and on the refrigerant pump during the free cooling mode.

5. The method of claim 1, wherein adjusting said energy requirement comprises intermittently turning off and on a working fluid mover (72) during the free cooling mode.

6. The method of claim 1, wherein adjusting said energy requirement comprises adjusting a speed of a working fluid mover (72) during the free cooling mode.

7. The method of any preceding claim, wherein said calculating and comparing steps are performed by a software program resident on a controller (30) of the air conditioning system.

8. The method of claim 1, further comprising:
continuously monitoring whether or not there is sufficient capacity available to continue running in the free cooling mode; and
switching the system into a cooling mode if it is determined that there is insufficient capacity available.

9. An air conditioning system (10) having a free cooling mode and a cooling mode, comprising:
a condenser (18) placing a refrigerant in heat exchange relationship with ambient outside air;
a first temperature sensor (16) for measuring a first temperature of said ambient outside air;
an evaporator (28) being configured to place said refrigerant in heat exchange relationship with a working fluid;
a second temperature sensor (26) for measuring a second temperature of the working fluid as the working fluid exits said evaporator:
a refrigerant pump (20) for pumping refrigerant in the free cooling mode; and
a controller (30) for calculating a temperature difference between said first and second temperatures, the air conditioning system **characterised by** said controller (30) adjusting an energy requirement of the air conditioning system based on said difference, wherein said controller adjusts said energy requirement by intermittently turning off and on the refrigerant pump (20) during the free cooling mode.

10. The air conditioning system of claim 9, further comprising a plurality of condenser fans (38,40) for circulating ambient outside air through said condenser.

11. The air conditioning system of claim 10, wherein said controller adjusts said energy requirement by intermittently turning off and on at least one of said plurality of condenser fans during the free cooling mode, and/or by varying a speed of at least one of said plurality of condenser fans in the free cooling mode.

12. The air conditioning system of claim 9, wherein said controller adjusts said energy requirement by varying a speed of said refrigerant pump during the free cooling mode.

13. The air conditioning system of claim 9, further comprising a working fluid mover (72) for moving the working fluid through sald evaporator.

14. The air conditioning system of claim 13, wherein said controller adjusts said energy requirement by intermittently turning off and on said working fluid mover during the free cooling mode, and/or by varying a speed of said working fluid mover during the free cooling mode.

15. The air conditioning system of claim 9, wherein said controller is arranged to:
continuously monitor whether or not there is sufficient capacity available to continue running in the free cooling mode; and
switch the system into a cooling mode if it is determined that there is insufficient capacity available.

## Patentansprüche

1. Verfahren zum Steuern einer Klimaanlage (10), das in einem Freikühlmodus arbeitet, umfassend:
Messen einer ersten Temperatur von Außenumgebungsluft in der Nähe eines Kondensators (18);
Messen einer zweiten Temperatur eines Arbeitsfluids, das aus einem Verdampfer (36) austritt;
Berechnen einer Temperaturdifferenz zwischen der ersten und zweiten Temperatur;
Vergleichen der Temperaturdifferenz mit einem vorgegebenen optimalen Wert; und
Anpassen eines Energiebedarfs der Klimaanlage auf Grundlage der Temperaturdifferenz, wobei das Verfahren **dadurch gekennzeichnet ist, dass** das Anpassen des Energiebedarfs intermittierendes Aus- und Einschalten einer Kältemittelpumpe (20) während des Freikühlmodus auf Grundlage der Temperaturdifferenz umfasst.

2. Verfahren nach Anspruch 1, wobei das Anpassen des Energiebedarfs intermittierendes Aus- und Einschalten wenigstens eines Kondensatorgebläses (38, 40) während des Freikühlmodus umfasst.

3. Verfahren nach Anspruch 1, wobei das Anpassen des Energiebedarfs Variieren einer Drehzahl wenigstens eines Kondensatorgebläses (38, 40) während des Freikühlmodus umfasst.

4. Verfahren nach Anspruch 1, wobei das Anpassen des Energiebedarfs intermittierendes Aus- und Einschalten der Kältemittelpumpe während des Freikühlmodus umfasst.

5. Verfahren nach Anspruch 1, wobei das Anpassen des Energiebedarfs intermittierendes Aus- und Einschalten einer Arbeitsfluidbewegungsvorrichtung (72) während des Freikühlmodus umfasst.

6. Verfahren nach Anspruch 1, wobei das Anpassen des Energiebedarfs Anpassen einer Drehzahl einer Arbeitsfluidbewegungsvorrichtung (72) während des Freikühlmodus umfasst.

7. Verfahren nach einem der vorangehenden Ansprüche, wobei die Schritte des Berechnens und Vergleichens von einem Softwareprogramm durchgeführt werden, das sich in einer Steuereinrichtung (30) der Klimaanlage befindet.

8. Verfahren nach Anspruch 1, ferner umfassend:
kontinuierliches Überwachen, ob ausreichend Kapazität zum Fortsetzen des Betriebs im Freikühlmodus vorhanden ist oder nicht; und
Umschalten des Systems in einen Kühlmodus, wenn bestimmt wird, dass nicht ausreichend Kapazität vorhanden ist.

9. Klimaanlage (10) mit einem Freikühlmodus und einem Kühlmodus, umfassend:
einen Kondensator (18), der ein Kältemittel in eine Wärmeaustauschbeziehung mit Umgebungsaußenluft bringt;
einen ersten Temperatursensor (16) zum Messen einer ersten Temperatur der Umgebungsaußenluft;
einen Verdampfer (28), der dazu konfiguriert ist, das Kältemittel in eine Wärmeaustauschbeziehung mit einem Arbeitsfluid zu bringen;
einen zweiten Temperatursensor (26) zum Messen einer zweiten Temperatur des Arbeitsfluids, wenn das Arbeitsfluid aus dem Verdampfer austritt;
eine Kältemittelpumpe (20) zum Pumpen von Kältemittel im Freikühlmodus; und
eine Steuereinrichtung (30) zum Berechnen einer Temperaturdifferenz zwischen der ersten und zweiten Temperatur, wobei die Klimaanlage **dadurch gekennzeichnet ist, dass** die Steuereinrichtung (30) einen Energiebedarf der Klimaanlage auf Grundlage der Differenz anpasst, wobei die Steuereinrichtung den Energiebedarf durch intermittierendes Aus- und Einschalten der Kältemittelpumpe (20) während des Freikühlmodus anpasst.

10. Klimaanlage nach Anspruch 9, ferner umfassend eine Vielzahl von Kondensatorgebläsen (38, 40) zum Zirkulierenlassen von Umgebungsaußenluft durch den Kondensator.

11. Klimaanlage nach Anspruch 10, wobei die Steuereinrichtung den Energiebedarf durch intermittierendes Aus- und Einschalten von wenigstens einem der Vielzahl von Kondensatorgebläsen während des Freikühlmodus und/oder durch Variieren einer Drehzahl von wenigstens einem der Vielzahl von Kondensatorgebläsen während des Freikühlmodus anpasst.

12. Klimaanlage nach Anspruch 9, wobei die Steuereinrichtung den Energiebedarf durch Variieren einer Drehzahl der Kältemittelpumpe während des Freikühlmodus anpasst.

13. Klimaanlage nach Anspruch 9, ferner umfassend eine Arbeitsfluidbewegungseinrichtung (72) zum Bewegen des Arbeitsfluids durch den Verdampfer.

14. Klimaanlage nach Anspruch 13, wobei die Steuereinrichtung den Energiebedarf durch intermittierendes Aus- und Einschalten der Arbeitsfluidbewegungseinrichtung während des Freikühlmodus und/oder durch Variieren einer Drehzahl der Arbeitsfluidbewegungseinrichtung während des Freikühlmodus anpasst.

15. Klimaanlage nach Anspruch 9, wobei die Steuereinrichtung dazu ausgelegt ist:
kontinuierlich zu überwachen, ob ausreichend Kapazität zum Fortsetzen des Betriebs im Freikühlmodus vorhanden ist oder nicht; und
das System in einen Kühlmodus umzuschalten, wenn bestimmt wird, dass nicht ausreichend Kapazität vorhanden ist.

## Revendications

1. Procédé de commande d'un système de climatisation (10) fonctionnant en mode de refroidissement naturel, comprenant :
la mesure d'une première température de l'air ambiant extérieur à proximité d'un condensateur (18) ;
la mesure d'une seconde température d'un fluide de travail sortant d'un évaporateur (36) ;
le calcul d'une différence de température entre lesdites première et seconde températures ;
la comparaison de ladite différence de température à une valeur optimale prédéterminée ;
et
l'ajustement d'un besoin en énergie du système de climatisation basé sur ladite différence de température, le procédé **caractérisé en ce que**
l'ajustement dudit besoin en énergie comprend le fait d'allumer et d'éteindre de façon intermittente
une pompe de réfrigérant (20) au cours du mode de refroidissement naturel basé sur ladite différence de température.

2. Procédé de la revendication 1, dans lequel l'ajustement dudit besoin en énergie comprend le fait d'allumer et d'éteindre de façon intermittente au moins un ventilateur de condensateur (38,40) au cours du mode de refroidissement naturel.

3. Procédé de la revendication 1, dans lequel l'ajustement dudit besoin en énergie comprend le fait de faire varier une vitesse d'au moins un ventilateur de condensateur (38,40) au cours du mode de refroidissement naturel.

4. Procédé de la revendication 1, dans lequel l'ajustement dudit besoin en énergie comprend le fait d'allumer et d'éteindre de façon intermittente la pompe de réfrigérant au cours du mode de refroidissement naturel.

5. Procédé de la revendication 1, dans lequel l'ajustement dudit besoin en énergie comprend le fait d'allumer et d'éteindre de façon intermittente le dispositif de déplacement du fluide de travail (72) au cours du mode de refroidissement naturel.

6. Procédé de la revendication 1, dans lequel l'ajustement dudit besoin en énergie comprend l'ajustement d'une vitesse d'un dispositif de déplacement du fluide de travail (72) au cours du mode de refroidissement naturel.

7. Procédé d'une quelconque revendication précédente, dans lequel lesdites étapes de calcul et de comparaison sont réalisées par un programme logiciel intégré à un contrôleur (30) du système de climatisation.

8. Procédé de la revendication 1, comprenant également :
la surveillance en continu du fait qu'il y ait ou pas une capacité suffisante disponible pour continuer de fonctionner en mode de refroidissement naturel ; et
le basculement du système en mode de refroidissement s'il est déterminé que la capacité disponible est insuffisante.

9. Système de climatisation (10) ayant un mode de refroidissement naturel et un mode de refroidissement, comprenant :
un condensateur (18) qui place un réfrigérant dans une relation d'échange de chaleur avec l'air ambiant extérieur ;
un premier capteur de température (16) pour mesurer une première température dudit air ambiant extérieure ;
un évaporateur (28) étant configuré pour placer ledit réfrigérant dans une relation d'échange de chaleur avec un fluide de travail ;
un second capteur de température (26) pour mesurer une seconde température du fluide de travail lorsque le fluide de travail sort dudit évaporateur :
une pompe de réfrigérant (20) pour pomper du réfrigérant en mode de refroidissement naturel ; et
un contrôleur (30) pour calculer une différence de température entre lesdites première et seconde températures, le système de climatisation **caractérisé en ce que**
ledit contrôleur (30) ajuste un besoin en énergie du système de climatisation basé sur ladite différence, dans lequel ledit contrôleur ajuste ledit besoin en énergie en allumant et en éteignant de façon intermittente la pompe de réfrigérant (20) au cours du mode de refroidissement naturel.

10. Système de climatisation de la revendication 9, comprenant également une pluralité de ventilateurs de condensateur (38,40) pour faire circuler l'air ambiant extérieur à travers ledit condensateur.

11. Système de climatisation de la revendication 10, dans lequel ledit contrôleur ajuste ledit besoin en énergie en allumant et en éteignant de façon intermittente au moins l'un de ladite pluralité de ventilateurs de condensateur au cours du mode de refroidissement naturel, et/ou en faisant varier une vitesse de l'au moins un de ladite pluralité de ventilateurs de condensateur en mode de refroidissement naturel.

12. Système de climatisation de la revendication 9, dans lequel ledit contrôleur ajuste ledit besoin en énergie en faisant varier une vitesse de ladite pompe de réfrigérant au cours du mode de refroidissement naturel.

13. Système de climatisation de la revendication 9, comprenant également un dispositif de déplacement du fluide de travail (72) pour déplacer le fluide de travail à travers ledit évaporateur.

14. Système de climatisation de la revendication 13, dans lequel ledit contrôleur ajuste ledit besoin en énergie en allumant et en éteignant de façon intermittente ledit dispositif de déplacement de fluide de travail au cours du mode de refroidissement naturel, et/ou en faisant varier une vitesse dudit dispositif de déplacement de fluide de travail au cours du mode de refroidissement naturel.

15. Système de climatisation de la revendication 9, dans lequel ledit contrôleur est placé pour :
surveiller continuellement le fait qu'il y ait ou pas une capacité suffisante disponible pour continuer de fonctionner en mode de refroidissement naturel ; et
basculer le système en un mode de refroidissement s'il est déterminé que la capacité disponible est insuffisante.
